# EUROPEAN PATENT SPECIFICATION

(11) **EP 1 852 228 B1**
(45) Date of publication and mention of the grant of the patent: **18.05.2011**
(21) Application number: 07106163.4
(22) Date of filing: 13.04.2007
(51) Int. Cl.: B27L 7/00, F16P 3/22, F16P 5/00

(54) **Wood-cutting and log-splitting machine**
Holzschneide- und Baumstammspaltmaschine
Machine pour couper le bois et fendre les bûches

(30) Priority: 24.04.2006 IT TO20060301
(43) Date of publication of application: 07.11.2007
(73) Proprietor: Ricca Andrea & C. S.n.c., 12022 Busca (Cuneo) (IT)
(72) Inventor: Ricca, Andrea, 12044, Frazione San Biagio Centallo (Cun (IT)
(74) Representative: Buzzi, Franco

(56) References cited:
- EP-A- 0 891 845
- US-A- 3 613 981

## Description

### Field of the invention

This invention is related to that type of wood-cutter and log-splitter machines according to the preamble of claim 1.

Such a wood-cutting and log-splitting machine is known from EP 0 891 845 A2.

In the course of the description and in the claims which follow reference will constantly be made to cases of such machines in which the splitter-blade is movable relative to the bearing surface: nevertheless it must be pointed out that the invention is equally applicable also in cases where otherwise the splitter-blade is stationary and the bearing surface is displaceable, by means of the linear actuator, between a retracted position and an advanced position relative to the blade.

### State of the prior art

In wood-cutting and log-splitting machines of this kind there is the problem of how to ensure the safety of the operator, especially in connection with the risk of accidents to the hands during the shifting of the splitter-blade from the retracted position to the advanced position. Pieces of timber to be split are in fact normally positioned manually onto the machine's bearing surface, as a result of which the possibility can arise of fingers or other parts of the operator's body being accidentally caught up between the timber piece and the moving blade.

In order to solve this problem it was proposed to provide the wood-splitter machine with safety means requiring the use of both the operator's hands in order to put into effect the blade's splitting operation of the piece of wood. In some known solutions, described and illustrated for instance in documents EP-B-0438997 and EP-B-0519150, the safety means have consisted of a pair of swinging arms or handles which perform a double function: to lock the piece of timber against the bearing surface in a centred position relative to the splitter-blade and to provide the consent to activation of the operating assembly so as to put into effect the splitting operation. In both cases a continuative action is necessitated by both of the operator's hands, which are thus necessarily occupied during the whole advancement cycle of the blade, with the consequent impossibility of correctly positioning by hand the pieces to be split, especially if they have been cut twisted or bent. Plainly no accident risks exist for the operator during the actual splitting phase of the wood piece, since the accidental insertion of the hands under the blade is not possible, while from this viewpoint the only critical phase is the one in which the blade progressively approaches the piece of timber until actual contact is made. Consequently the safety system proposed in the earlier documents cited above results in an ever greater encumbrance for the operator.

In document DE-9915379U a wood-splitting machine of the type described above is known, in which the operating assembly can be activated through the control means , even independently of the safety means being actuated, in order to move the splitter-blade from the retracted position to a resting position corresponding to the application to the splitter-blade of a resistance to its displacement towards the advanced position. Such a resting position typically corresponds to the contact between the splitter-blade and the piece of timber to be split. When the splitter-blade takes up its bearing position, a stop device renders the operating assembly temporarily inactive so as to stop displacement of the splitter-blade in the rest position. In order, therefore, to activate the operating assembly again so as to proceed to the splitting of the timber, the operator has to operate the safety devices with both hands.

In this latter known solution the splitter-blade is oscillating relative to the support structure between a lowered angular position and a raised angular position, as a result of its coming into contact with the piece of timber to be split, so as to activate the stop device by means of a traction cable.

That solution is not able to ensure the necessary operational reliability, in the first place on account of the fact that the sensitivity of the safety function operated by the oscillating splitter-blade is widely variable as a function of the distance between the area of possible contact of the operator's fingers with the blade and the oscillation axis of the latter: if the contact area is close to the axis, the safety function can even fail. The reliability of the safety function is also open to the risk of rupture of the traction cable.

To overcome the above-mentioned drawback, the Applicant has proposed, in patent EP-B-0891845, operating the stop device (consisting of a valve integrated within the linear actuator) by the shifting of the said linear actuator relative to the machine's support structure when the splitter-blade reaches the bearing position, so as to prevent its further displacement.

Although this solution is appreciably convenient and effective, it is not easily applicable to wood-cutting or wood-splitting or like machines of great dimensions, in which the overall structure of blade, frame, actuator and control valve can be very heavy and hence difficult to balance in its entirety with resilient elements external to the structure itself.

### Summary of the invention

The object of the present invention is to provide an equally efficient and convenient solution, which can be applied with advantage to the above-mentioned arrangement having a thrust actuator axially positioned with respect to the blade.

According to the invention this object is achieved thanks to the solution defined in the characterizing part of Claim 1.

As a result of this solution, during the initial phase of the displacement of the blade from the retracted position towards the advanced position, the operator can comfortably position and align the piece to be split upon the machine bearing surface with one or even with both hands, should the control means include a pedal.

In this phase, as soon as the blade encounters even a slight resistance to its shifting towards the advanced position, and in any case when it is positioned resting upon the piece of wood to be split or against any obstacle whatsoever, its displacement is automatically and immediately stopped, thanks to the operation of the stop device activated by the movable connecting member between the linear actuator and the splitter-blade.

In this phase there cannot be any injury risk for the operator, since the mere contact between one of his hands or other part of the body, or any other possible obstacle, and the blade would cause it to be immediately stopped. In order to then initiate the start-up of the splitting phase, or successive advancement movement, the operator must necessarily provide in some way at least a pulse to the safety means, and thereafter use both hands.

Moreover the invention provides further peculiar expedients of which use may be made by the operator in order to carry out, following the approach and contact phase between the splitter-blade and the piece of timber to be split, and before the splitting phase, an intermediate clamping phase, in which the linear actuator applies a superior thrust to the blade such as to clamp the wood piece to be split firmly and safely against the machine's bearing surface, namely in order to avoid the piece falling.

### Brief description of the drawings

The invention will now be described in detail with reference to the attached drawings provided simply by way of non limiting example, in which drawings:
- figure 1 is diagrammatic, front elevation and partially cut-away view of a log-splitting machine according to the invention,
- figure 2 is a side elevation view of figure 1,
- figure 3 is a view in partial vertical section along line III-III of figure 1,
- figure 4 is a vertical section view, partial and on a greater scale along line IV-IV of figure 3 which shows a detail of the wood-splitting machine in a first operating state,
- figure 5 is a view in elevation, partial and on a greater scale following the arrow V of figure 2 in the configuration corresponding to the operating state of figure 4,
- figures 6-7, 8-9 and 10-11 are views analogous to figures 4 and 5 respectively, in respective different operating states of the machine,
- figures 12-13, 14-15, 16-17, 18-19 and 20-21 are views corresponding respectively to figures 4-5, 6-7, 8-9 and 10-11 of a first embodiment variant of the invention,
- figures 22-23, 24-25, 26-27, 28-29 and 30-31 are views analogous respectively to figures 12-13, 14-15, 16-17, 18-19, and 20-21 of a second embodiment variant of the invention,
- figure 32 is an outline which shows the electro-hydraulic operating assembly of the log-splitting machine according to the invention, and
- figure 33 shows a variant of figure 32.

### Detailed description of examples exemplary embodiments of the invention

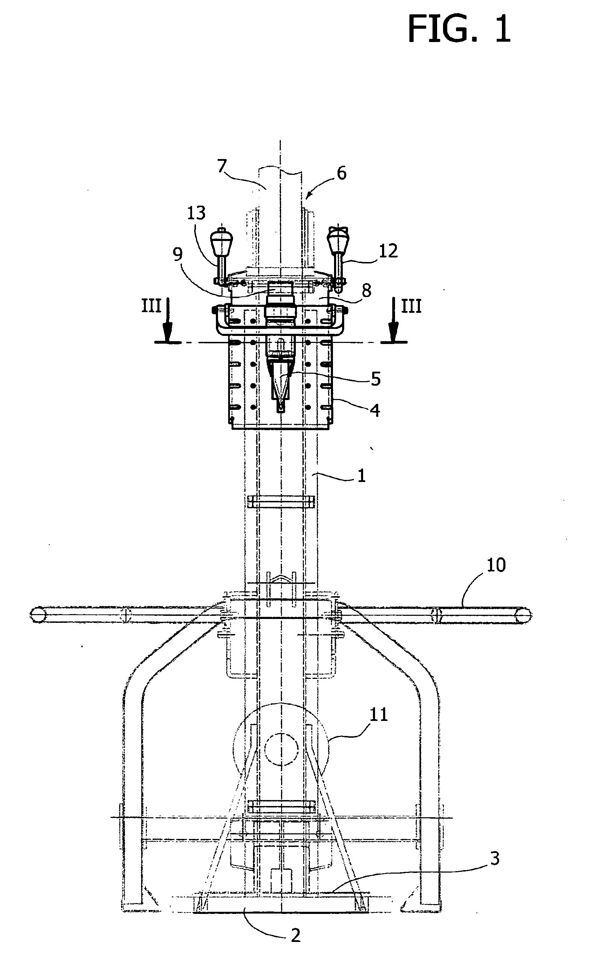

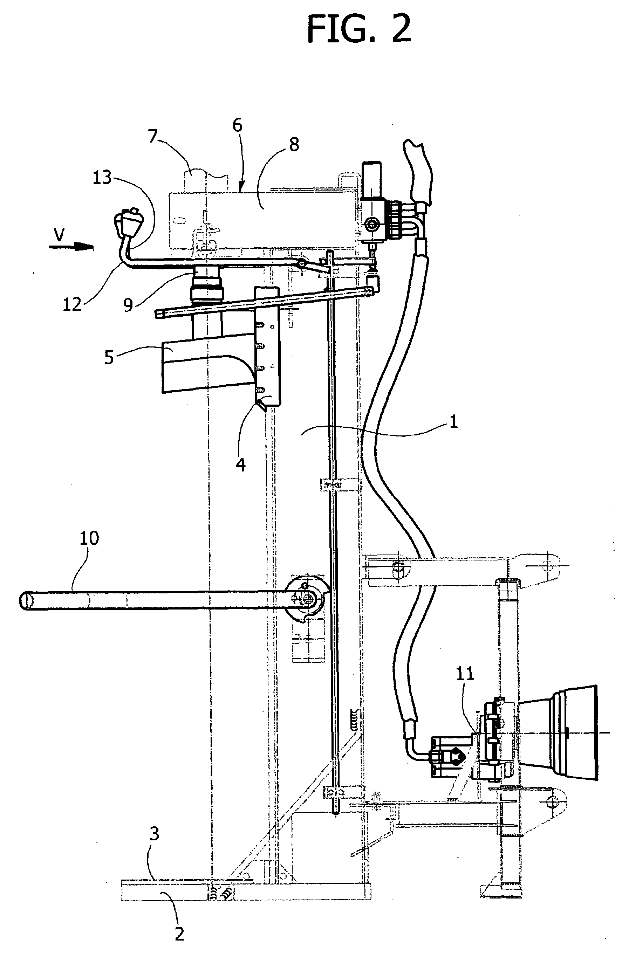

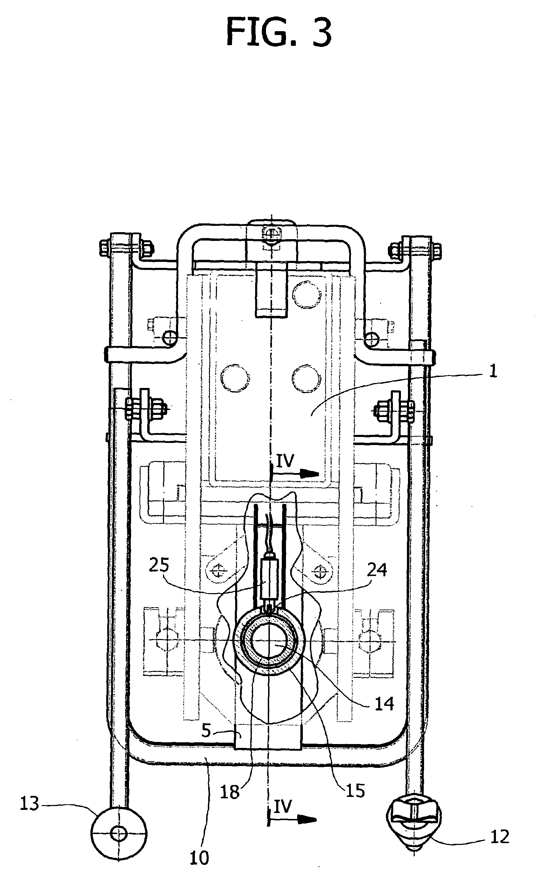

With reference to figures 1-3, the log-splitting machine according to the invention essentially comprises a support structure made up of a vertical post 1 having inferiorly a base 2 defining a horizontal rest platform 3 for the timber piece which is to be split.

Sliding vertically along the post 1 there is a guided support 4 bearing a cantilevered splitter-blade 5 which is displaceable between the raised position, depicted in figures 1 through 3, and a lowered position for splitting the timber piece positioned on the platform 3, via a linear actuator 6 consisting of a hydraulic jack. The cylinder 7 of the hydraulic jack 6 is fixed to a support 8 carried by the top of the post 1, while its stem9 is connected to the splitter-blade 5 in the manner clarified in the following.

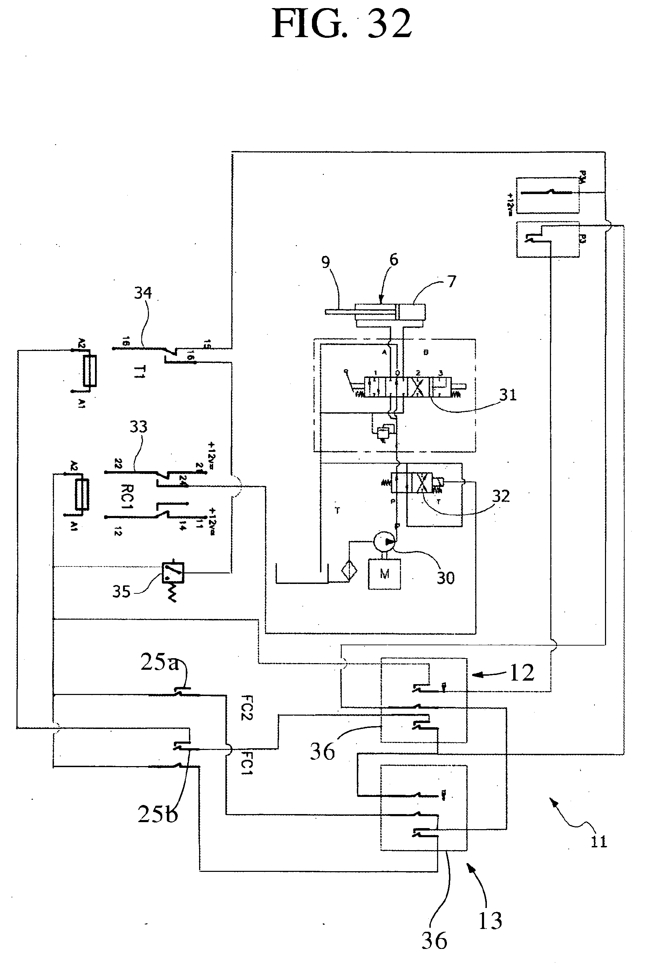

The post 1 also bears an oscillating front safety guard 10 and at the rear an electro-hydraulic operating assembly of the jack 6 generally indicated as 11 and which will be described in detail here in the following section, with reference to figure 32.

To control of the operating assembly 11, two swinging levers 12, 13 are provided which project from the opposite sides of the post 1 beneath the support 8 and whose functioning will also be described in the following. The levers 12 and 13 can be either oscillating or they can be fixed and provided with handgrips carrying respective operating push buttons.

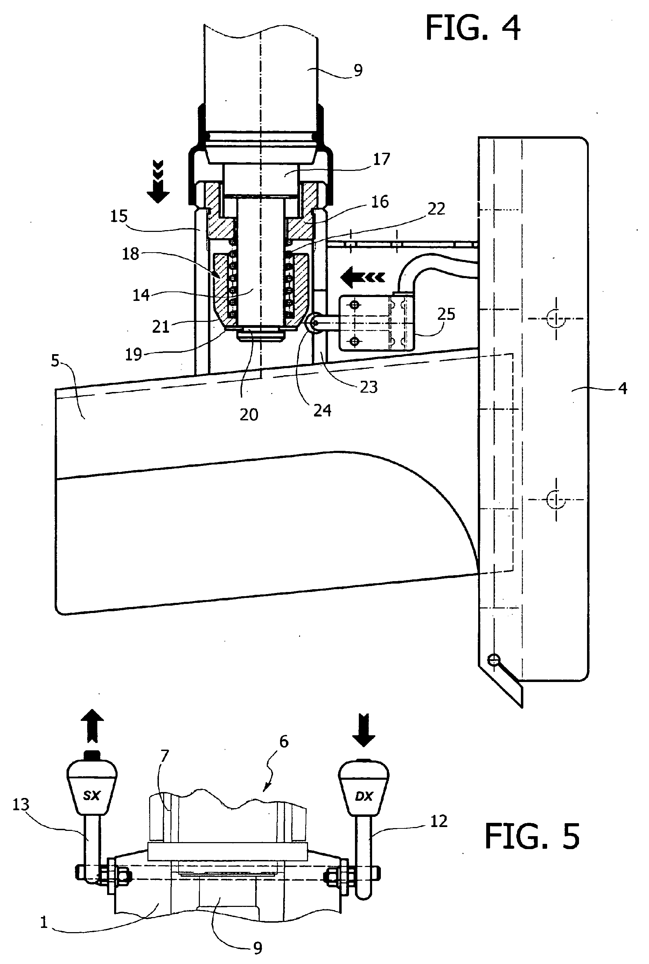

With reference now in greater detail to figure 4, as according to the primary feature of the invention, the stem9 of the hydraulic jack 6 is connected to the splitter-blade 5 not in a rigid fashion but through a connecting member 14 which permits, as it will be explained in the following, relative axial displacements between the stem9 and the blade 5. This connecting member 14 is made up of an axial tang of the stem9, which, in the illustrated example, is inserted in a vertically sliding way within a bush 15, fixed to the top side of the blade 5 and provided superiorly with a ring guide 16 for an enlarged portion 17 of the tang 14. A bush 18 or the like is mounted on the lower part of the tang 14 and is retained axially on the tang 14 by means of a resilient ring 19 fitted within an annular groove 20. The lower end of the bush 18 is formed with a bevel with a generally conical surface 21, and between this bush 18 and the tang 14 a spring 22 is interposed, which reacts against the ring guide 16.

On the side of the support 4 which is slidable along the post 1, the bush 15 has an opening 23 through which projects a prod 24 - in this case a roller prod - of a micro-switch 25, which is fixedly secured to the blade 5 and is connected to the machine operating assembly 11.

In the condition shown in figure 4, corresponding to the retracted or at least partially raised position of the blade 5 with respect to the platform 3, the stem9 with the related coupling tang 14 is arranged in a raised position relative to the blade 5, in which there is no interaction between the bush 18 and the roller prod 24 of the switch 25, which is in such a case deactivated. When a relative displacement takes place between the stem9 with the related coupling tang 14 and the blade 5, namely an axial shift - downwards - of the bush 18 in the ways explained in the following, the micro-switch 25 is activated by the interaction between the said bush 18 and the roller prod 24. This takes place when the blade 5, during its travel from the raised position downwards, encounters a resistance to its downward motion towards the platform 3, i.e. comes into contact with the timber piece to be split, or with any other obstacle whatsoever, and comes into abutment thereupon.

Referring now to figure 32, the operating assembly 11 of the hydraulic jack 6 essentially comprises a hydraulic pump 30 and a main valve 31, in the shown example consisting of a three-position distributor (but a four-position version would be possible), whose displacement in the direction corresponding to the downward motion of the stem 9 and hence of the blade 5 is operated by means of one of the two levers 12, 13: in the case illustrated, by means of the lowering of lever 12, i.e. through the operation of the associated push button, and consequent operation of the cursor of the valve 31. Alternatively, the operation of the valve 31 corresponding to the downward motion of the blade 5 could be controlled via a pedal (not shown).

Reference numeral 32 indicates an auxiliary valve for instance of the two-position type, which in the illustrated example is interposed between the pump 30 and the main valve 31.Alternatively, the valve 32 can be arranged downstream of the valve 31, or the two valves could be integrated in a single block component. The auxiliary valve 32 is controlled via a relay 33 operatively connected to the micro-switch 25. When the latter is operated as a result of the lowering of the coupling tang 14 relative to the blade 5, the advance travel of the stem 9 of the jack 6 is stopped.

Numerals 34 and 35 show respectively a timer and an optional pressure switch, the functions of both of which will be explained in the following. Numeral 25A indicates an electrical switching device, which, in the illustrated example, consists of a second micro-switch, whose function will likewise be explained later on.

With reference to figures 4 to 11, the splitting cycle performed by the machine in accordance with the invention will now be described.

As previously stated, figure 4 represents the raised position of the blade 5, to which corresponds the raised position of the coupling tang 14 of the stem 9 of the jack 6 in which there is no interference between the bush 18 and the micro-switch 25.

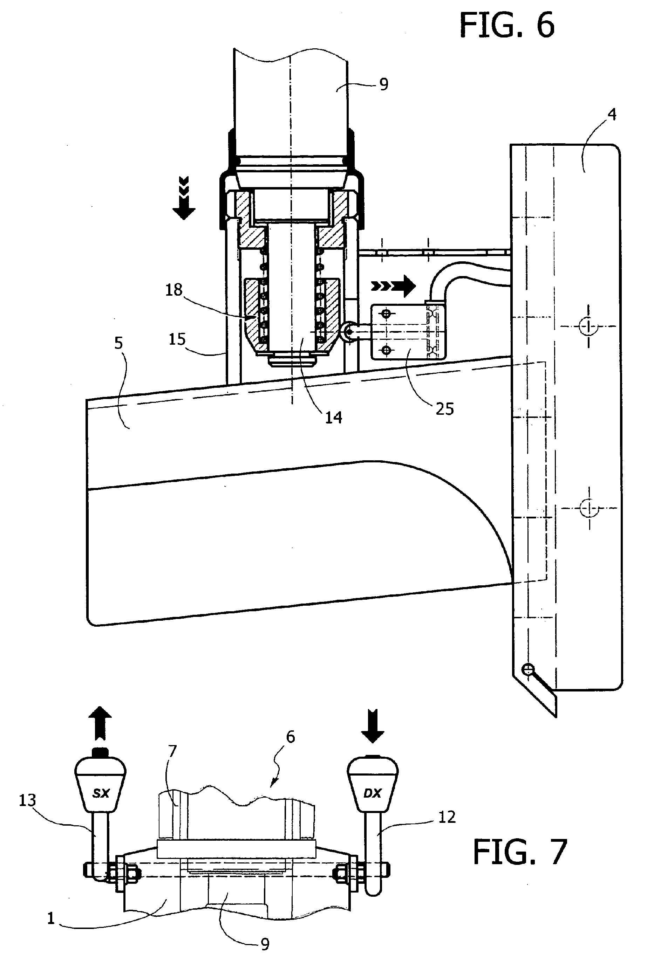

In order to perform the downward movement of the blade 5 from this position, it is necessary to operate one of the two levers 12, 13: in the case of the illustrated example, the lever 12 (and the push button associated therewith) is lowered, while lever 13 does not need to be operated. The arrows in figure 5 (as well as in figures 7, 9 and 11) indicate, when pointing downward, the lowering of the relevant lever (and of the related push button) and, when pointing upward, they indicate that the raised position is being maintained.

The downward travel of the blade 5 continues until it encounters a resistance to its downward displacement, typically due to its coming to bear against the timber piece to be split, which has been positioned on the platform 3. As a result of this contact the coupling tang 14 of the stem 8 of the jack 6 slides downwards relative to blade 5, whereby the bush 18 intercepts the roller prod 24 of the micro-switch. This is activated and, via the relay 33, brings about the stopping of the jack 6 and hence of the blade 5. This situation is represented in figure 6. The corresponding condition of the two levers 12 and 13 (or of the push buttons associated therewith) is represented in figure 7, and does not differ from the one shown in figure 5.

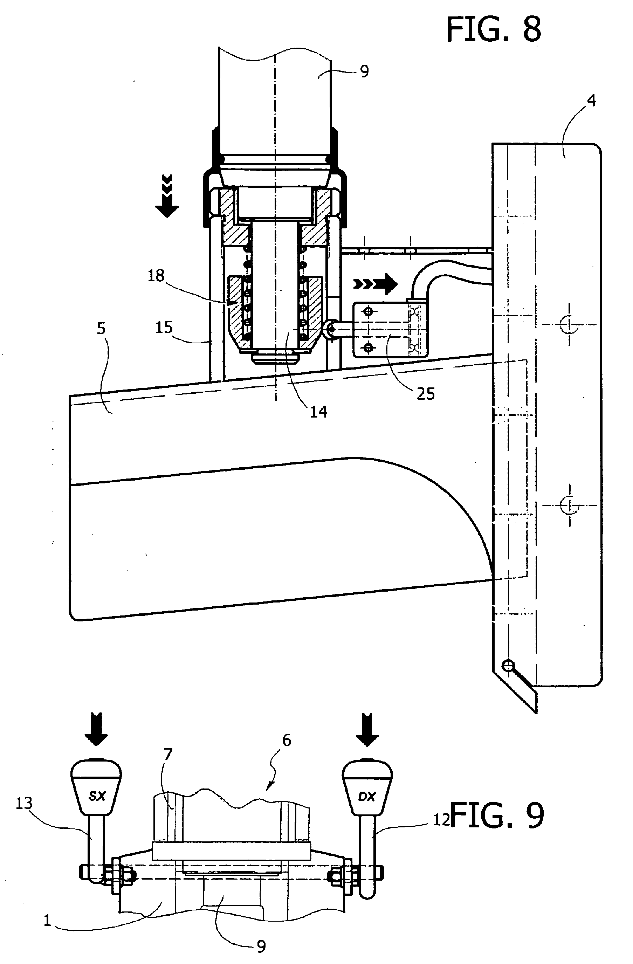

Starting from that position, in order to resume the lowering of the blade 5 towards the lowered splitting position it is necessary to operate both the levers 12 and 13, or both the push buttons associated with them, in the manner, which plainly requires the action of both the operator's hands, represented in figure 9. In this way the micro-switch 25 (or the relay 33 controlled by it) is inhibited, thus permitting the completion of the splitting stroke.

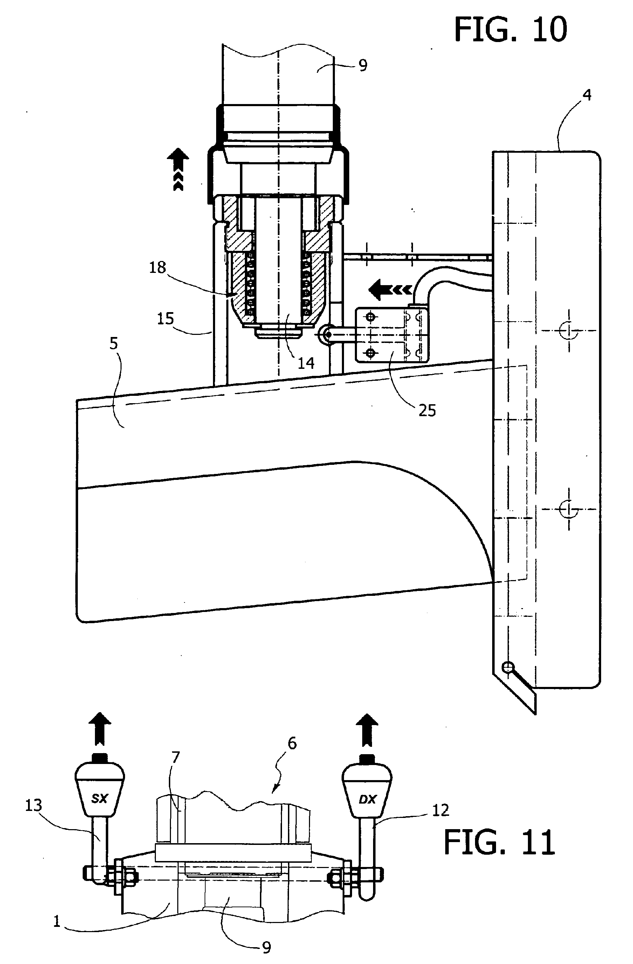

At the end, both the levers 12, 13 (or the push buttons associated with them) can be released to return to the raised position, as shown in figure 11. This release manoeuvre brings into operation the commutation device 25a which, causing the commutation of the main 31 and auxiliary 32 valves, permits the blade 5 to return to the raised starting position. (figure 10). In the example the device 25a is represented by a second micro-switch, which is brought into operation by the release of the control levers 12 and 13. A third micro-switch 25b is provided to stop the upward return stroke of the blade 5.

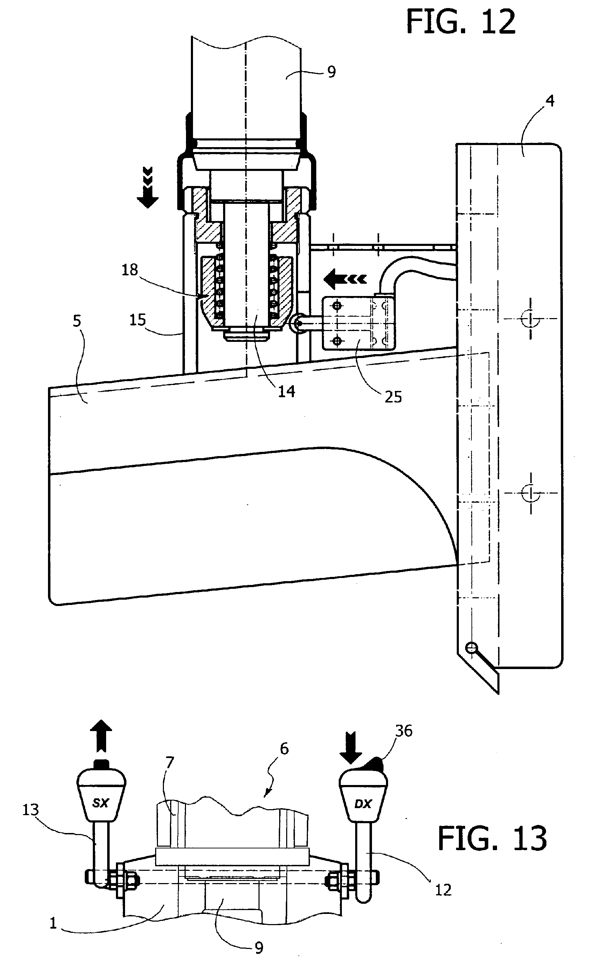

Figures 12 to 21, in which components which are identical or similar to those previously described are indicated with the same reference numbers, show a variant of the control system of the timber-splitting machine which utilises both the timer 34 and the pressure switch 35. In this variant the lever 12 which controls the lowering of the blade 5 from the raised position to the position of rest against the wood piece to be split is provided with a selector, e.g. an oscillating selector 36.

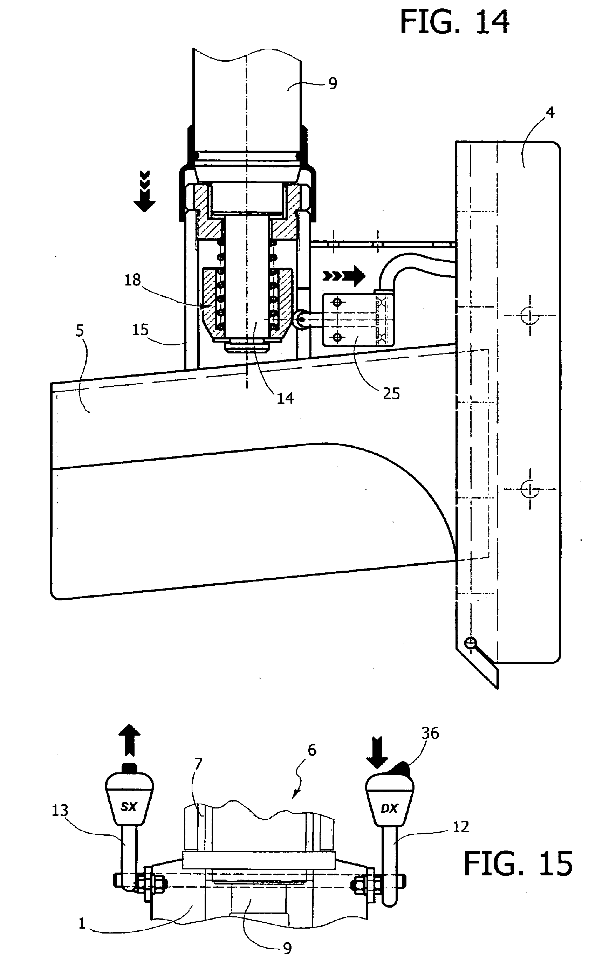

Shifting of the selector 36 towards one side, as indicated in figure 13, controls the descent of the blade 5 from the raised position (figure 12) as far as the rest position against the piece of timber to be split, at which the activation of the micro-switch 25 by the bush 18 brings about the stopping of the blade 5 (figure 14), precisely in the same manner as described previously.

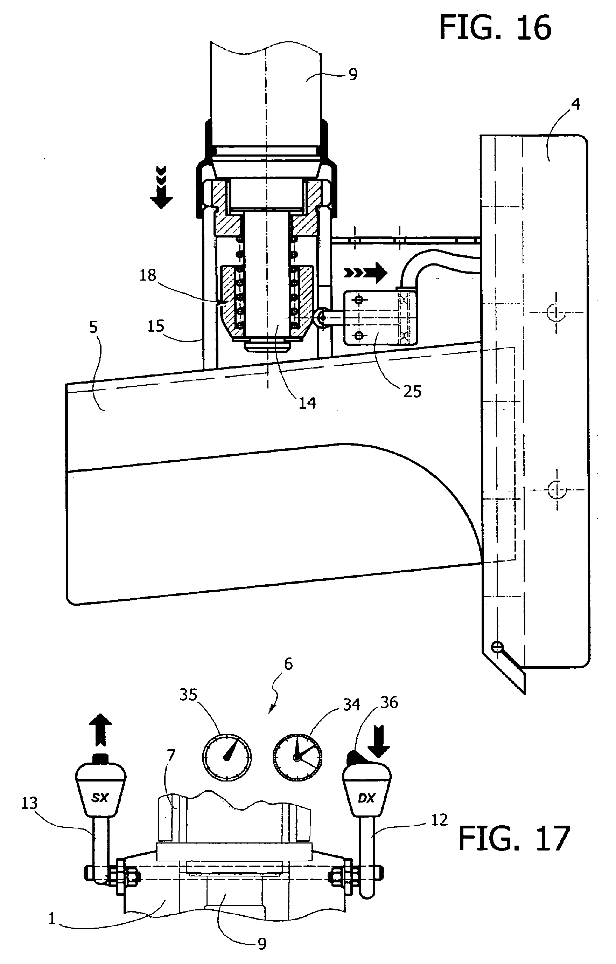

In this position, by shifting the selector 36 towards the other side as indicated in figure 17, it is possible via the jack 6 to apply to the blade 5 a thrust of a larger amount but however still insufficient to split the piece of timber, but sufficient to lock it more firmly and securely against the platform 3. The application of this thrust takes place after a certain lapse of time from the moment when the blade 5 comes into its position resting on the wood piece, depending on the setting of the timer 34. The extent of the thrust is controlled in this case via the pressure switch 35 at a value for example between 20 and 50 kg or, in general, a value proportional to the dimensions of the timber pieces to be worked. It should be borne in mind that the thrust of the blade 5 against the piece of timber on reaching its resting state will as an example be of the order of around 6 Kg.

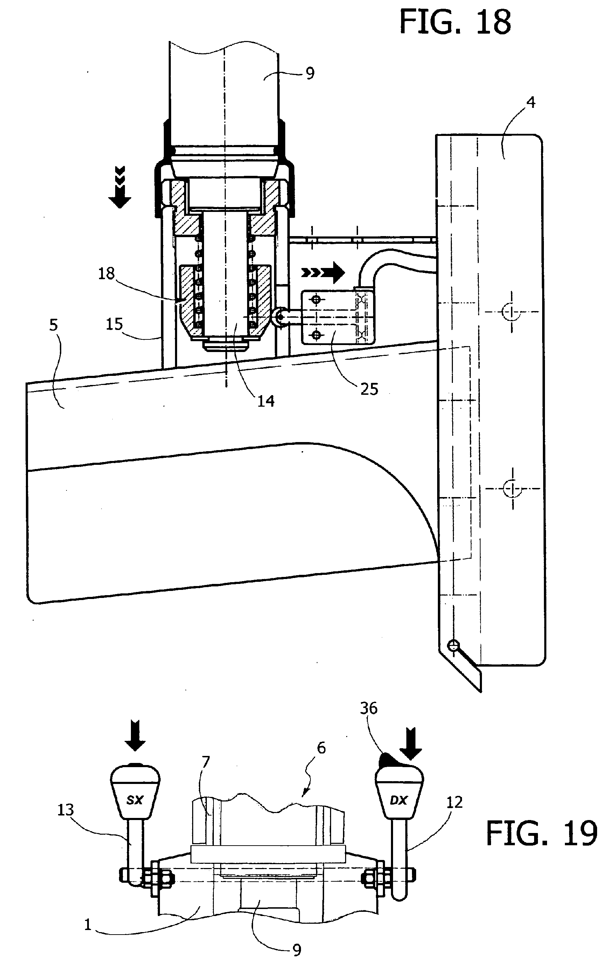

As already stated, this operation can be performed with just one hand, by operating the selector 36, and it can of course be suppressed by avoiding operating the selector 36 and by controlling the ensuing splitting stroke directly by operating both levers 12, 13, as illustrated in figures 18 and 19.

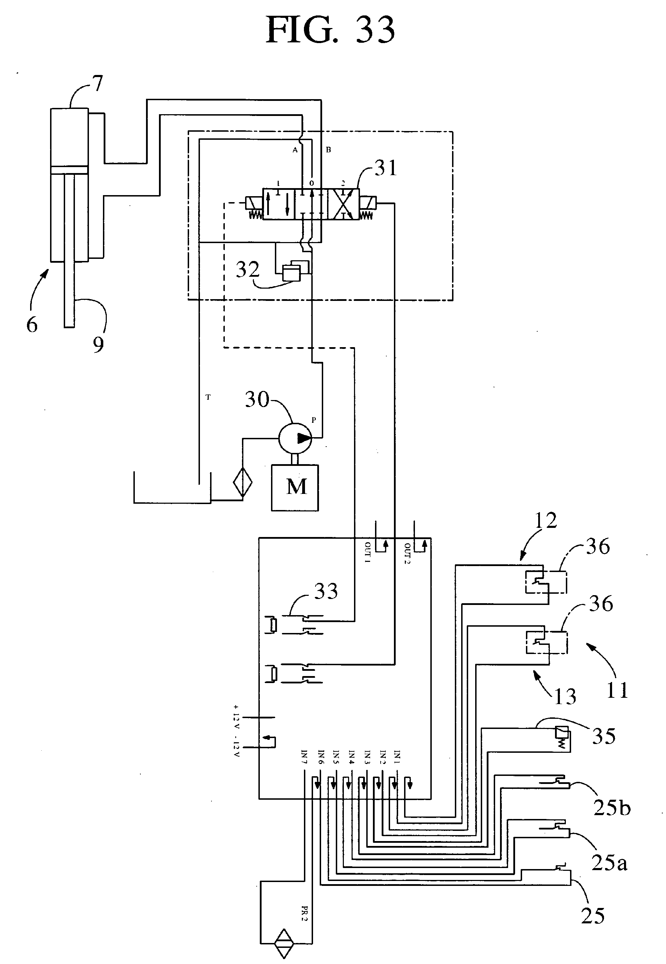

It is to be pointed out that the oscillating selector 36 can be provided on the other lever 13, and also that each lever 12, 13 can be provided with a respective selector 36 selectively operable by either operator's hand. The or each selector 36 can be replaced by a double switching push button to be depressed a first time in order to perform downward displacement of the blade 5 from the raised to the rest position against the piece of wood to be split. Then, upon releasing the push button and pressing it a second time locking of the piece of wood against the platform 3 through the blade 5 is performed. Such a solution is depicted in the diagram of figure 33.

Moreover, the pressure switch 35 could be replaced by a second timer.

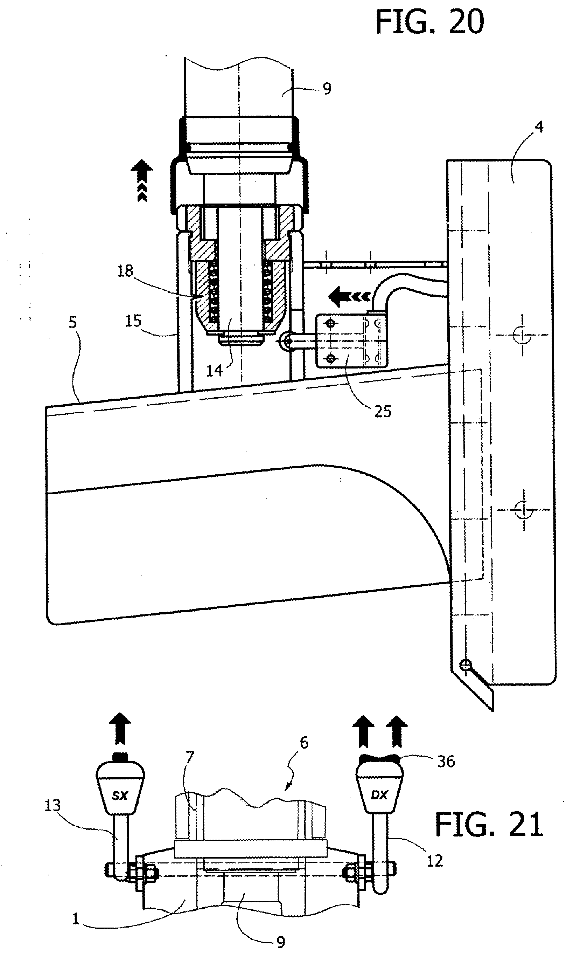

At the end, releasing both levers 12 and 13 (figure 21), or the respective push buttons, allows the blade 5 to be returned to the raised starting position, depicted in figure 20 (even in this case by a switching of the micro-switch 25a, which interacts with the main valve 31 and the secondary valve 32, in a similar way to that described above).

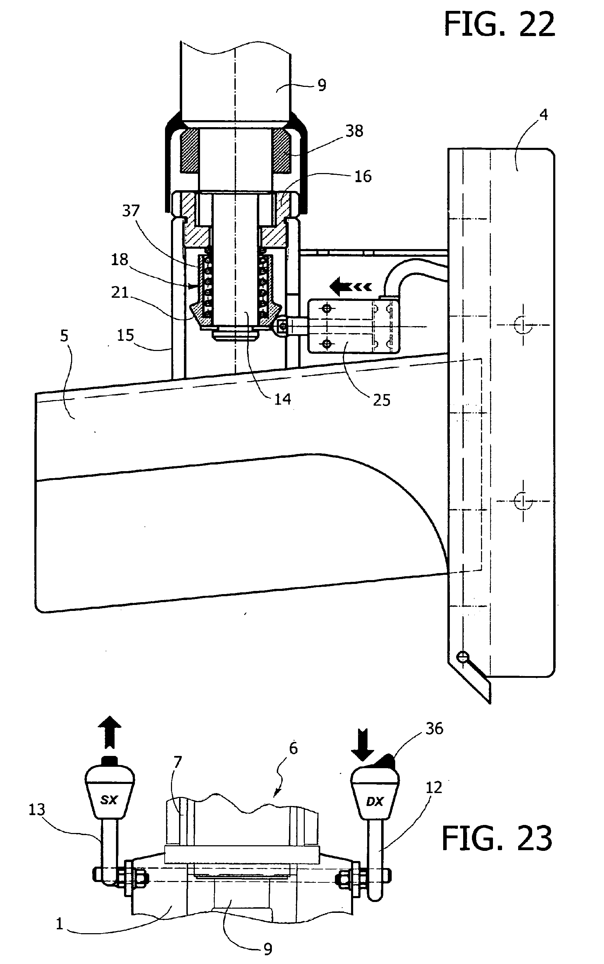

The further variant depicted in figures 22 to 31, in which parts identical to those described earlier are also indicated with the same reference numbers, differs from the solution described above with reference to figures 12 to 21, only in that it does not use the thrust meter and allows the clamping phase of the timber piece to be split to be effected, following the resting phase of the blade 5 thereon, via an extra stroke of the tang 14 which produces, with a delay set via the timer 34, a disabling of the micro-switch 25. Referring in detail to figure 22, in this variant the bush 18 has a narrowed portion 37 above its conical end 21. Furthermore, between the stem 9 of the jack 6 and the ring guide 16 of the bush 15 a sleeve 38 of a resiliently compressible material is provided.

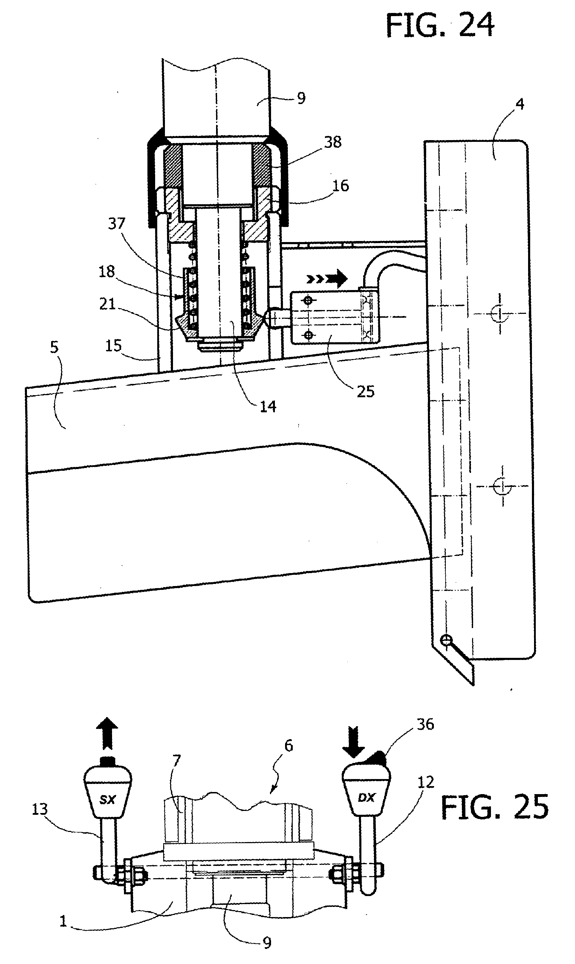

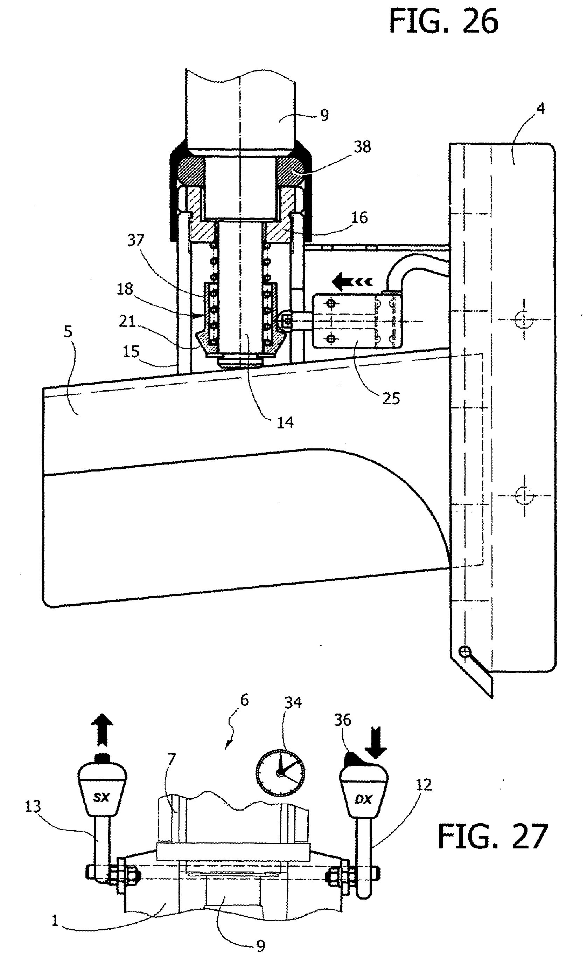

Operation is in this case analogous to that described with reference to the actuating procedure in figures 12 to 21, via the operation of the oscillating selector 36, or of the above mentioned double switching push button, associated to lever 12 and/or lever 13. The only difference consists of that, following the lowering of the blade 5 to the rest position against the timber piece and the resulting activation of the micro-switch 25 (figures 24 and 25), the operation of the selector 36 or push button controls, following the delay set by the timer 34, the follow-up downward stroke of the stem 9, made possible by the resilient axial compression of the sleeve 38. This is allowed to happen by the disabling of the micro-switch 25, whose roller prod 24 has positioned itself at the narrow part 37 of the bush 18 (figures 26 and 27). In this way the forced blocking phase of the timber piece between the blade 5 and the platform 3 is carried out.

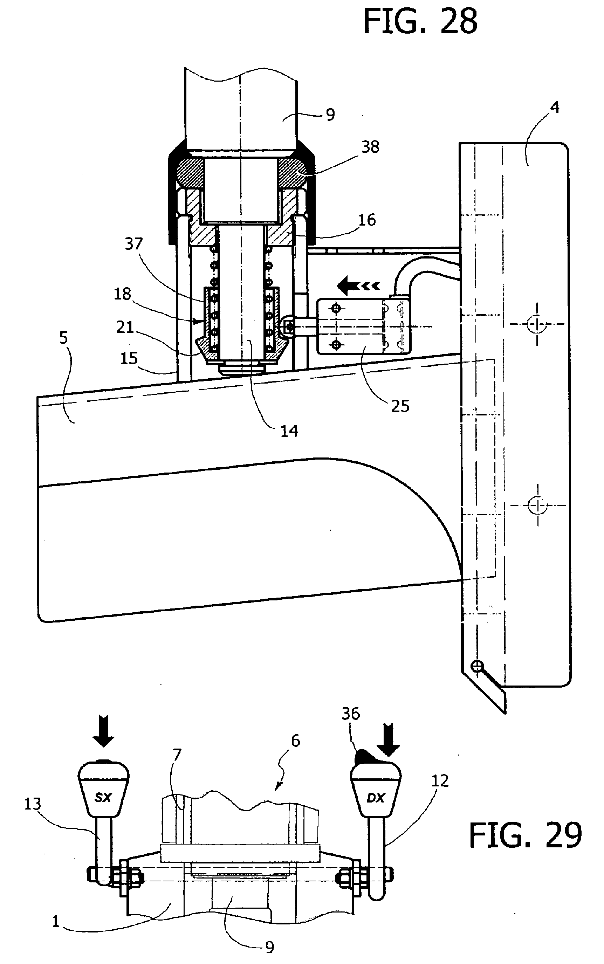

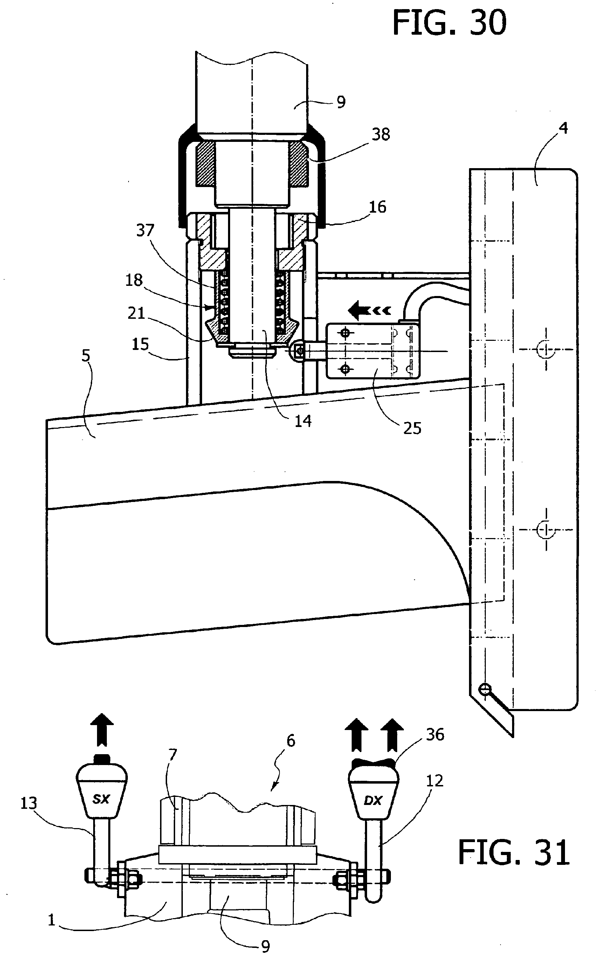

Starting from this position the joint operation of the levers 12 and 13 (or of the push buttons associated therewith) enables the further lowering of the blade 5 (figures 28 and 29) in order to carry out the splitting of the piece of wood.
Finally, by releasing the levers 12 and 13 (or their associated push buttons) the blade 5 is brought back to the raised position, reinstating the starting condition (figures 30 and 31), similarly to what was previously described.

Figures 32 and 33 show by way of example the electro-hydraulic circuit of the machine of the invention according to the two alternative embodiments disclosed in the above.

## Claims

1. Wood-cutting and log-splitting machine, comprising a support structure (1), a linear actuator (6) carried by said support structure (1), a splitting blade (5) displaceable by means of the said linear actuator (6) between a retracted position and an advanced position relative to a resting surface (3) of a timber piece to be split or other element to be processed, an operating assembly (11) of the linear actuator (6), and control means (12, 13) of said operating assembly (11) including safety means (13) which require the use of both operator's hands in order to put into operation the splitting of the timber piece by said blade (5), in which the said operating assembly (11) is capable of being rendered operational via said control means (12; 13), even independently of intervention of the said safety means (13), in order to move said splitting blade (5) from the retracted position to a rest position corresponding to the application to the splitting blade (5) of a resistance to its displacement towards said advanced position, and in which a stop device (25) is provided to render said operating assembly (11) temporarily inactive and to stop displacement of said splitting blade (5) in the said rest position, starting from which position said operating assembly (11) can hence be rendered again operative by actuating said safety means (13), so as to continue displacement of the splitting blade (5) to said advanced position, **characterized in that** the said stop device (25) is carried by the splitting blade (5) and is operated via an attachment part (14) provided between said linear actuator (6) and said splitting blade (5) and shiftable relative to said splitting blade (5) when the latter is positioned in said rest position, and **in that** it further comprises a timer (34) operatively associated with the said operating assembly (11) and selectively operable by the operator, in said rest position of the splitting blade (5), to control application to the said splitting blade (5), after a predetermined delay, of an additional blocking thrust of the timber piece to be split.

2. A machine in accordance with Claim 1, **characterized in that** said attachment part (14) is connected to the splitting blade (5) in an axially slidable fashion through a predetermined stroke.

3. A machine in accordance with Claim 1 or Claim 2, **characterized in that** said attachment part is made up of an end (14) of the stem (9) of said linear actuator (6) slidably engaged within a bush (15) fixed to the said splitting blade (5).

4. A machine in accordance with Claim 3, **characterized in that** said attachment end (14) passes through a ring guide (16) carried by said bush (15) and carries a bush-like member (18) designed to interact with said stop device (25), a resilient means (22) being interposed between said member (18) and the said ring guide (16).

5. A machine in accordance with one or more of the preceding Claims, **characterized in that** said stop device consists of a switch (25) operatively connected to the said operating assembly (11).

6. A machine in accordance with one or more of the preceding Claims, **characterized in that** said control means include a first lever or push button (12) and the said safety device include a second lever or push button (13).

7. A machine in accordance with Claim 6, **characterized in that** at least one of said first and second levers (12, 13) carries an auxiliary control device (36) operatively associated with said timer (34).

8. A machine in accordance with any one of the preceding Claims, **characterized in that** said control means include a pedal.

9. A machine in accordance with any one of the preceding Claims, **characterized in that** said additional blocking thrust is controlled by means of a pressure switch (35) operatively connected to the said operating set (11).

10. A machine in accordance with any one of the preceding Claims, **characterized in that** said additional blocking thrust is controlled by means of a further timer.

11. A machine in accordance with any one of the preceding Claims, **characterized in that** in order to apply the said additional blocking thrust there is provided a follow-up stroke device (38) of the said attachment end (14) of the said stem (9) of the said linear actuator (6) relative to the splitter blade (5), following which the said stop device (25) is deactivated.

12. A machine in accordance with Claim 11, **characterized in that** said follow-up stroke device includes a resiliently compressible member (38) interposed between the stem (9) of the said linear actuator (6) and said splitting blade (5).

## Patentansprüche

1. Holzschneide- und Baumstammspaltmaschine, enthaltend eine Tragstruktur (1), einen Linearstellantrieb (6), der von der Tragstruktur gehalten ist (1), eine Spaltklinge (5), die mit Hilfe des Linearstellantriebs (6) zwischen einer zurückgezogenen Stellung und einer vorgeschobenen Stellung im Bezug auf eine Auflagefläche (3) eines zu spaltenden Holzstückes oder eines anderen zu verarbeitenden Elementes verschiebbar ist, eine Betätigungsanordnung (11) des Linearstellantriebs (6) und Steuereinrichtungen (12, 13) der Betätigungsanordnung (11), die Sicherheitseinrichtungen (13) enthalten, die die Benutzung beider Hände der Bedienperson erfordern, um das Spalten des Holzstückes mit der Klinge (5) durchzuführen, wobei die Betätigungsanordnung (11) über die Steuereinrichtungen (12; 13) auch unabhängig von einem Eingreifen der Sicherheitseinrichtungen (13) in Betrieb gesetzt werden kann, um die Spaltklinge (5) von der zurückgezogenen Stellung in eine Auflagestellung, die dem Einwirken eines Widerstandes auf die Spaltklinge (5) entspricht, zu bewegen, um sie in die vorgeschobene Stellung zu verschieben, und eine Stoppvorrichtung (25) vorgesehen ist, um die Betätigungsanordnung (11) vorübergehend außer Betrieb zu setzen und die Verschiebung der Spaltklinge (5) in der Auflagestellung zu stoppen, wobei aus dieser Stellung die Betätigungsanordnung (11) somit wieder in Betrieb gesetzt werden kann, indem die Sicherheitseinrichtungen (13) derart betätigt werden, dass eine Verschiebung der Spaltklinge (5) in die vorgeschobene Stellung fortgesetzt wird, **dadurch gekennzeichnet, dass** die Stoppvorrichtung (25) von der Spaltklinge (5) gehalten ist und über ein Anbringungsteil (14) betätigt wird, das zwischen dem Linearstellantrieb (6) und der Spaltklinge (5) vorgesehen und im Bezug auf die Spaltklinge (5) verschiebbar ist, wenn sich letztgenannte in der Auflagestellung befindet, und **dadurch**, dass sie weiterhin eine Zeitgabeeinrichtung (34) enthält, die mit der Betätigungsanordnung (11) wirkungsmäßig verbunden und von der Bedienperson in der Auflagestellung der Spaltklinge (5) wahlweise betätigt werden kann, um die Einwirkung eines zusätzlichen Blockierschubes des zu spaltenden Holzstückes auf die Spaltklinge (5) nach einer vorbestimmten Verzögerung zu steuern.

2. Maschine nach Anspruch 1, **dadurch gekennzeichnet, dass** das Anbringungsteil (14) mit der Spaltklinge (5) axial verschiebbar um einen vorbestimmten Hub verbunden ist.

3. Maschine nach Anspruch 1 oder 2, **dadurch gekennzeichnet, dass** das Anbringungsteil aus einem Ende (14) des Kolbens (9) des Linearstellantriebs (6) besteht, das gleitfähig in einer Buchse (15) aufgenommen ist, die an der Spaltklinge (5) befestigt ist.

4. Maschine nach Anspruch 3, **dadurch gekennzeichnet, dass** das Anbringungsende (14) eine Ringführung (16) durchläuft, die von der Buchse (15) gehalten ist, und ein buchsenähnliches Element (18) hält, das dazu eingerichtet ist, mit der Stoppvorrichtung (25) zusammenzuwirken, wobei eine Federeinrichtung (22) zwischen dem Element (18) und der Ringführung (16) angeordnet ist.

5. Maschine nach wenigstens einem der vorhergehenden Ansprüche, **dadurch gekennzeichnet, dass** die Stoppvorrichtung aus einem Schalter (25) besteht, der wirkungsmäßig mit der Betätigungsanordnung (11) verbunden ist.

6. Maschine nach wenigstens einem der vorhergehenden Ansprüche, **dadurch gekennzeichnet, dass** die Steuereinrichtungen einen ersten Hebel oder Drucktaster (12) enthalten und die Sicherheitsvorrichtungen einen zweiten Hebel oder Drucktaster (13) enthalten.

7. Maschine nach Anspruch 6, **dadurch gekennzeichnet, dass** der erste und/oder der zweite Hebel (12, 13) Zusatzsteuervorrichtungen (36) hält/halten, die wirkungsmäßig mit dem Zeitgeber (34) verbunden sind.

8. Maschine nach einem der vorhergehenden Ansprüche, **dadurch gekennzeichnet, dass** die Steuereinrichtungen ein Pedal enthalten.

9. Maschine nach einem der vorhergehenden Ansprüche, **dadurch gekennzeichnet, dass** der zusätzliche Blockierschub mit Hilfe eines Druckschalters (35) gesteuert wird, der wirkungsmäßig mit der Betätigungsanordnung (11) verbunden ist.

10. Maschine nach einem der vorhergehenden Ansprüche, **dadurch gekennzeichnet, dass** der zusätzliche Blockierschub mit Hilfe eines weiteren Zeitgebers gesteuert wird.

11. Maschine nach einem der vorhergehenden Ansprüche, **dadurch gekennzeichnet, dass**, um den zusätzlichen Blockierschub anzuwenden, eine Folge-Hubvorrichtung (38) des Anbringungsendes (14) des Kolbens (9) des Linearstellantriebes (6) im Bezug auf die Spaltklinge (5) vorgesehen ist, wobei dieser folgend die Stoppvorrichtung (25) deaktiviert wird.

12. Maschine nach Anspruch 11, **dadurch gekennzeichnet, dass** die Folge-Hubvorrichtung ein federndes, zusammendrückbares Element (38) enthält, das zwischen dem Kolben (9) des Linearstellantriebes (6) und der Spaltklinge (5) angeordnet ist.

## Revendications

1. Machine pour couper du bois et fendre des bûches, comprenant une structure de support (1), un actionneur linéaire (6) supporté par ladite structure de support (1), une lame de fente (5) pouvant être déplacée au moyen dudit actionneur linéaire (6) entre une position rétractée et une position avancée par rapport à une surface de repos (3) d'une pièce de charpente à fendre ou un autre élément à traiter, un ensemble de fonctionnement (11) de l'actionneur linéaire (6), et des moyens de commande (12, 13) dudit ensemble de fonctionnement (11) comprenant des moyens de sécurité (13) qui nécessitent l'utilisation des deux mains de l'opérateur afin de mettre en fonctionnement le partage de la pièce de charpente par ladite lame (5), dans laquelle ledit ensemble de fonctionnement (11) peut être rendu opérationnel via lesdits moyens de commande (12 ; 13), même indépendamment de l'intervention desdits moyens de sécurité (13), afin de déplacer ladite lame de fente (5) de la position rétractée à une position de repos correspondant à l'application sur la lame de fente (5) d'une résistance à son déplacement vers ladite position avancée, et dans laquelle un dispositif d'arrêt (25) est prévu pour rendre ledit ensemble de fonctionnement (11) temporairement inactif et pour arrêter le déplacement de ladite lame de fente (5) dans ladite position de repos, en commençant par cette position, ledit ensemble de fonctionnement (11) peut par conséquent être à nouveau rendu opérationnel en actionnant lesdits moyens de sécurité (13) afin de continuer le déplacement de la lame de fente (5) vers ladite position avancée, **caractérisée en ce que** ledit dispositif d'arrêt (25) est supporté par la lame de fente (5) et est actionné via une partie de fixation (14) prévue entre ledit actionneur linéaire (6) et ladite lame de fente (5) et pouvant être déplacé par rapport à ladite lame de fente (5) lorsque cette dernière est positionnée dans ladite position de repos, et **en ce qu'**elle comprend en outre une minuterie (34) associée de manière opérationnelle avec ledit ensemble de fonctionnement (11) et pouvant être sélectivement actionnée par l' opérateur, dans ladite position de repos de ladite lame de fente (5), afin de commander l'application sur ladite lame de fente (5), après un délai prédéterminé, d'une poussée de blocage supplémentaire de la pièce de charpente à fendre.

2. Machine selon la revendication 1, **caractérisée en ce que** ladite partie de fixation (14) est raccordée à la lame de fente (5) d'une manière axialement coulissante sur une course prédéterminée.

3. Machine selon la revendication 1 ou la revendication 2, **caractérisée en ce que** ladite partie de fixation est composée d'une extrémité (14) de la tige (9) dudit actionneur linéaire (6) mis en prise de manière coulissante à l'intérieur d'une douille (15) fixée sur ladite lame de fente (5).

4. Machine selon la revendication 3, **caractérisée en ce que** ladite extrémité de fixation (14) passe par un guide annulaire (16) supporté par ladite douille (15) et supporte un élément en forme de douille (18) conçu pour interagir avec ledit dispositif d'arrêt (25), des moyens élastiques (22) étant intercalés entre ledit élément (18) et ledit guide annulaire (16).

5. Machine selon une ou plusieurs des revendications précédentes, **caractérisée en ce que** ledit dispositif d'arrêt se compose d'un commutateur (25) raccordé de manière opérationnelle audit ensemble de fonctionnement (11).

6. Machine selon une ou plusieurs des revendications précédentes, **caractérisée en ce que** lesdits moyens de commande comprennent un premier levier ou bouton poussoir (12) et ledit dispositif de sécurité comprend un deuxième levier ou bouton poussoir (13).

7. Machine selon la revendication 6, **caractérisée en ce qu'**au moins l'un desdits premier et deuxième leviers (12, 13) supporte un dispositif de commande auxiliaire (36) associé de manière opérationnelle à ladite minuterie (34).

8. Machine selon l'une quelconque des revendications précédentes, **caractérisée en ce que** lesdits moyens de commande comprennent une pédale.

9. Machine selon l'une quelconque des revendications précédentes, **caractérisée en ce que** ladite poussée de blocage supplémentaire est contrôlée au moyen d'un commutateur de pression (35) raccordé de manière opérationnelle audit ensemble de fonctionnement (11).

10. Machine selon l'une quelconque des revendications précédentes, **caractérisée en ce que** ladite poussée de blocage supplémentaire est commandée au moyen d'une autre minuterie.

11. Machine selon l'une quelconque des revendications précédentes, **caractérisée en ce que**, afin d'appliquer ladite poussée de blocage supplémentaire, on prévoit un dispositif de suivi de course (38) de ladite extrémité de fixation (14) de ladite tige (9) dudit actionneur linéaire (6) par rapport à la lame de fente (5), suite à quoi ledit dispositif d'arrêt (25) est désactivé.

12. Machine selon la revendication 11, **caractérisée en ce que** ledit dispositif de suite de course comprend un élément élastiquement compressible (38) intercalé entre la tige (9) dudit actionneur linéaire (6) et ladite lame de fente (5).
